# EUROPEAN PATENT SPECIFICATION

(11) **EP 1 735 895 B1**
(45) Date of publication and mention of the grant of the patent: **25.08.2010**
(21) Application number: 04724926.3
(22) Date of filing: 31.03.2004
(51) Int. Cl.: H02K 7/06, B62D 3/06, B62D 3/08, F16H 25/22, F16H 25/24

(54) **ELECTRIC ACTUATOR**
ELEKTRISCHES BETÄTIGUNGSGLIED
VERIN ELECTRIQUE

(43) Date of publication of application: 27.12.2006
(73) Proprietor: Danaher Motion Stockholm AB, 135 70 Stockholm (SE)
(72) Inventor: TAUBE, Peter, Gibsonia, PA 15044 (US); TRAGO, Bradley, A., Blacksburg, VA 24060 (US); BECKER, Wolfgand, 71111 Waldenbuch (DE); VAN ZEE, Dennis, Durand, IL 61024 (US); REUGER, Ulrich, 82110 Germering (DE)
(74) Representative: VALEA AB
(86) International application number: PCT/SE2004/000500
(87) International publication number: WO 2005/096472

(56) References cited:
- EP-A1- 1 344 709
- US-A- 4 588 913
- US-A1- 2003 117 037
- US-B1- 6 378 646

## Description

### Field of the invention

The present invention relates to an electric motor or actuator.

### Background of the invention

Hydraulic motors and actuators are widely used within automotive and material handling industry. For example, in trucks, and especially fork lift trucks, hydraulic motors are used for steering, powering forklift up and down, tilting and a number of auxiliary functions, etc.

Even though hydraulic motors and actuators are relatively reliable, there are a number of problems with them. A hydraulic system is not environmentally favourable. Hydraulic motors need hydraulic oils to operate. This implies a need for refilling oil, risk of leakage etc. Yet, another problem with hydraulic actuators is manoeuvring it. A hydraulic actuator, for example, is controlled by connecting tubes extending from the actuator to a controlling arrangement, such as a stick or control buttons. The controlling arrangement functions as a valve for hydraulic oil to and from the actuator. This means time and space consuming assembly, inaccurate control, limited design freedom causing an unfavourable ergonomic situation for the truck drivers, etc.

The hydraulic motors can be substituted by electric motors. However, the presently available electric motors have a number of disadvantages: large size, low efficiency, less reliability etc.

EP 0386771 relates a linear actuator wherein a load-bearing body or structure made of relatively heavy metal provides for flexibly supporting an electric motor, the output shaft of which is connected, via a belt drive, to a tubular shaft parallel to the output shaft of the motor, and connected in rotary manner, at a first point, to the load-bearing structure and, at a second point, to a plastic element integral with the load-bearing structure. The output member of the actuator 1 consisting of a screw coaxial with the tubular shaft and connected to the same via a recirculating-ball screw-nut-screw coupling. A linear actuator wherein a load-bearing body or structure made of relatively heavy metal provides for flexibly supporting an electric motor, the output shaft of which is connected, via a belt drive, to a tubular shaft parallel to the output shaft of the motor, and connected in rotary manner, at a first point, to the load-bearing structure and, at a second point, to a plastic element integral with the load-bearing structure; the output member of the actuator consisting of a screw coaxial with the tubular shaft and connected to the same via a recirculating-ball screw-nut-screw coupling.

EP 0780955 discloses an actuator with a ball screw arrangement wherein the system is built in order to facilitate assembling and disassembling of the system and to prevent an overload being applied to the stator of the electrical motor.

EP 1182765 discloses an electrical motor and ball screw arrangement where the ball screw is mounted at one end of a rotary shaft of the electrical motor.

EP 1320174 discloses a compact electromechanical linear actuator with a ball screw arrangement fastened to one end of a rotor in an electrical motor.

US 5086861 disclose a steering actuator with a ball screw arrangement attached to one of a planetary gear attached to a rotor shaft of an electrical motor.

US 5590732 relates to an electrically assisted power steering system for a motor vehicle including a housing, a shaft slidably supported in the housing, a ball-and-nut mechanism operatively mounted on the shaft, and an electric motor mounted in the housing for transmitting rotary force from the electric motor through the ball-and-nut mechanism to the shaft. The ball-and-nut mechanism including a nut assembly disposed around the shaft and having one end rockably and rotatably supported in the housing by a four-point contact bearing or an automatic aligning bearing, and a plurality of balls movably held between an opposite end of the nut assembly and a screw groove defined in the shaft.

US 6202498 relates to an axial displacement arrangement in the form of a ball screw and nut achieving a highly compact configuration by effecting ball recirculation entirely within the ball screw shaft. The ball recirculation portion of the ball screw shaft is axially short with respect to an elongated driven nut. As the nut is rotated, illustratively by an electric motor coupled thereto, the ball screw shaft is displaced axially along an axial support member. The axial support member has radially outward extending splines, and the ball recirculation portion of the ball screw shaft has radially inward extending splines, the inward and outward splines being arranged to face one another whereby a linear ball bearing region is formed. The linear ball bearing permits the ball recirculation arrangement and its associated actuation element to be displaced axially along the support element, but is precluded from rotating. A segmented ball recirculation end cap arrangement prevents the linear ball bearings from escaping axially from between the ball groove spine arrangement and the axial support element.

US 6492753 disclose an electrical motor with variable axial rotor/stator alignment. The rotor is movable with respect to both the stator and the shaft while still transferring torque to the shaft. The solution does not use a ball screw arrangement.

Other less relevant documents include:
US 4742882, US 4841790, US 4893518, US5921344, US 5988311, US 6186268,
US 4828062, US 4842090, US 5083626, US 5685390, US 5975234, US 6155376.

US 2003/0117037 relates to an actuator for the linear displacement of a member to be controlled comprising a motor part and an actuating device part including a threaded screw with linear displacement, and a rotary member provided with a threaded portion matching the screw thread, the rotary member capable of being driven in rotation by the motor part and being supported by bearings in the form of roller bearing stops with four contact points arranged on either axial side of said threaded portion to guide the rotary member axially and radially. The raceways of the balls are directly in the rotary member and integral with parts of the body or the cover of the actuator. This invention does not include a sleeve for carrying the magnets. One of the advantages of the sleeve of the present invention is to simplify the assembly of the magnets.

### Summary of the invention

The main objective of the present invention is to provide an electric motor or actuator, which solves above-mentioned problems.

The electric motor is intended for use as a linear steering motor in e.g. lift trucks, pallet loader, golf car or any other power steered vehicles, especially counter balance lift trucks. It also may assist pinion and rack steering devices. However, other applications areas are possible. The main object of the invention is to replace the hydraulic systems in the intended application area.

The advantages of the present invention include:
- Small and compact size (fits in the space for a hydraulic cylinder allowing easy upgrade of existing systems),
- Environmentally clean (no need for hydraulic oils),
- Efficient (saves battery and increases run time per charge)
- Variable operating voltages, the invention allows for variations able to handle any voltage from low voltages such as 12V and below to high voltages such as 400 V and above 36/48 V and 72/80 V.
- Improved acoustical performance (a hydraulic pump is very noisy compared to the present invention)
- Reduced part count (very few components needed to create a system)
- Reduced maintenance and warranty (from reduced part count and leakage)
- Simplified installation - labour savings
- Flexibility & design freedom - no hoses to steering wheel
- Improved safety - since it is an electrical system there is the possibility to limit traction speed or lift height when steering (or vice versa)
- Improved precision over a hydraulic system, which allows use of wire guidance systems and navigation systems such as laser navigation. These systems were previously reserved for smaller trucks where electric steering was available.

For these reasons, a device functioning as an electric motor or actuator is provided as disclosed in independent claim 1.

A method of actuating such a device is diclosed in independent claim 20.

Preferred embodiments of the invention are disclosed in the remaining dependent claims.

### Short description of the drawings

The present invention is described more closely with reference to exemplary embodiments illustrated in attached drawings, in which:
Fig. 1 is exterior view of an arrangement according to the invention,
Fig. 2 is a sectional view of along line II-II illustrating an embodiment according to the first aspect of the present invention,
Fig. 3 is side view of the embodiment illustrated in Fig. 1,
Fig. 4 is a cross section view along line IV-IV in Fig 1,
Fig. 5 is a second embodiment of the invention,
Figs. 6-10 illustrate different ball return systems used in the invention,
Fig. 11 is a sectional view of along line II-II illustrating an embodiment according to the second aspect of the present invention, and
Fig. 12 is an exemplary embodiment illustrating schematically the invention in a steering application.

### Detailed description of the preferred embodiments

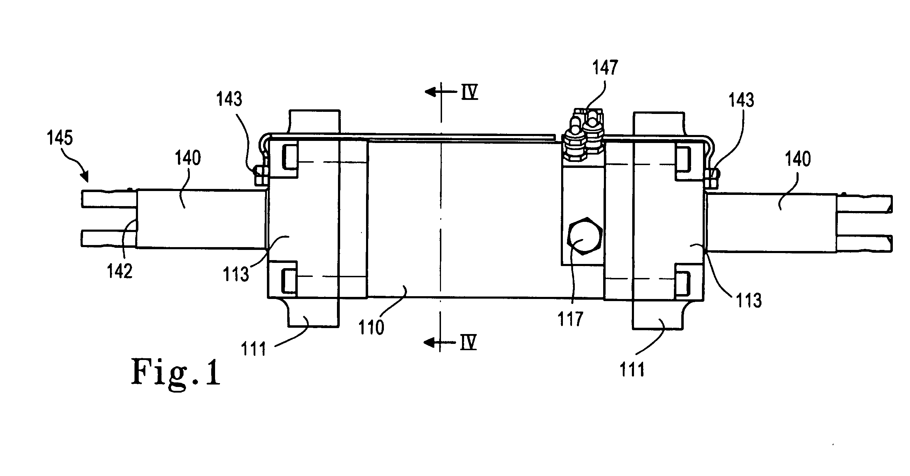

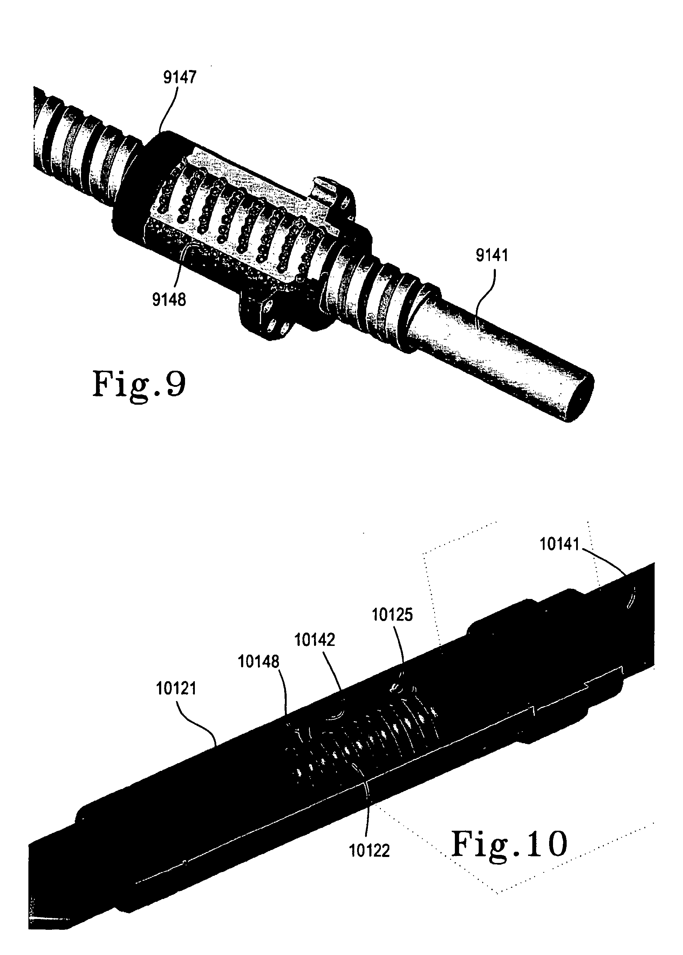

In the following, the invention will be described with reference to preferred embodiments, illustrated schematically in Figs. 1-9 according to a first aspect of the invention and Fig. 10 according to a second aspect of the invention. The arrangement according to the invention may work as an actuator or a motor for providing a linear force. It may also work as a generator converting a linear movement to electrical energy. However, in the following "actuator" is used as a general term.

Fig. 1 is an exterior view of an actuator 100 according to the invention. The actuator comprises a housing 110 having ends 113 and supports 111 at each end.

A shaft 140 extends through the actuator and is provided with connection portions 145. Strain-relief connectors for electrical conductors are denoted with 147. The housing can be made of wrapped steel, steel tube, cast or any other suitable material. The shaft is made of steel or any other suitable material.

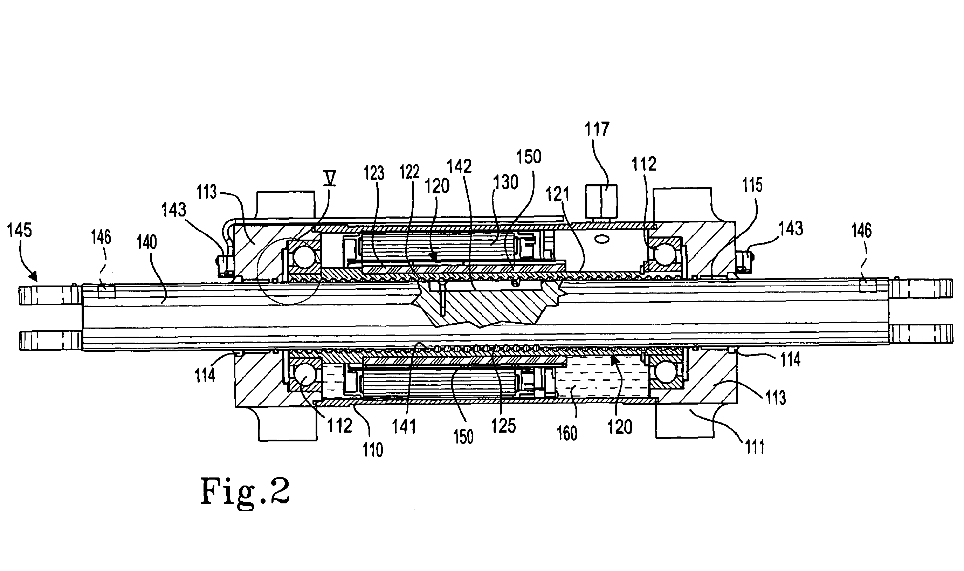

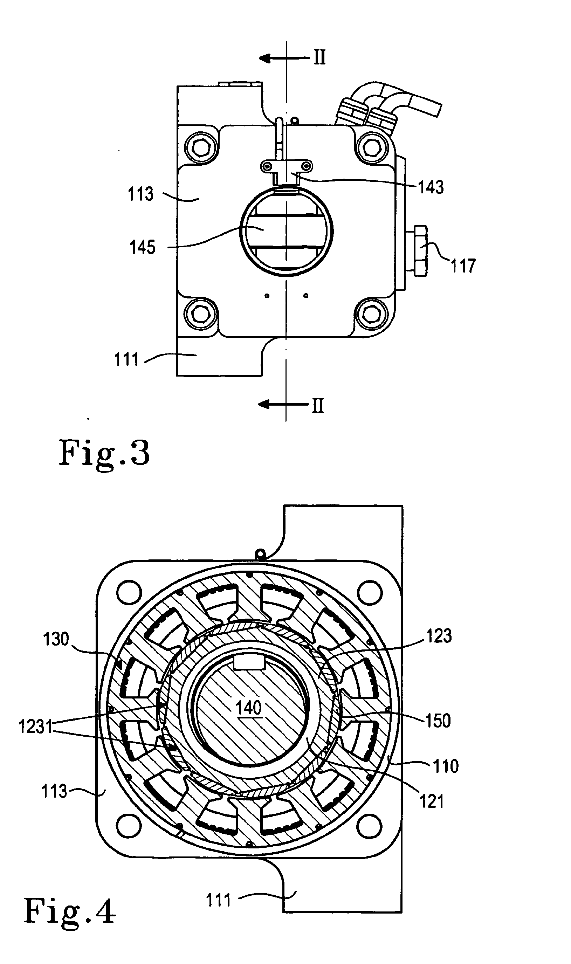

Fig. 2 illustrates a cut through the actuator of Fig. 3 along line II-II; also Figs. 3 to 5 are considered in following description. Inside the housing 110 is arranged a rotating member 120 comprising a ball nut member 121 and mounted on bearings 112 at each end. One or several stators 130 are disposed on the inner surface of the housing.

The ball nut, shaped substantially cylindrically (or any other suitable shape), is provided with substantially helicoidally shaped grooves 122 for receiving bearing balls 125. It is also possible to provide the grooves at least on some section of the ball nut. The ball nut is shaped stepped providing a space on one end portion for receiving and positioning a sleeve 123. The sleeve 123 has an interior shape corresponding to the outer surface of the ball nut and an outer surface comprising portions 1231 for receiving a number of magnetic elements 150, arranged for interacting with the stators 130 and rotating the ball nut. Most preferably, substantially flat portions are arranged as grooves. Thus, the ball nut is rotated directly by the magnetic elements interacting with the stators.

The grooves for receiving magnetic elements fix the elements in a straight manner so that they do not slide during the assembly process. The magnetic elements are glued according to one preferred process. However, they may also be screwed or otherwise attached to the sleeve. It is also possible to use a tape, wrapper, stocking or bandage as an additional protection and/or fixing layer.

The ball nut can be made of steel e.g. 19MnCr5, plastic or any other suitable material. Additionally, a material, which blocks, diverts or minimizes the magnetic field from the magnetic elements to attract the balls 125, can be used. Moreover, an air-gap may be provided between the magnetic element and the sleeve to reduce the magnetic force. However, calculations have been shown that the effect of the magnetic fields from the magnetic elements is negligible.

The balls can be made of steel, ceramic or any other suitable material. Furthermore, the shaft can be made of metallic material such as steel, plastic or any other suitable material in one or several pieces. Making the shaft in several pieces allows manufacturing advantages. It also allows using different features for the motor.

The horizontally displaceable shaft 140 (with respect to the plane of the drawing) extends through the ball nut. The shaft is at least partly shaped as a ball screw, comprising outer grooves 141, corresponding to the grooves of the ball nut, for receiving the bearing balls 125. In this case, the middle section of the shaft is arranged as the ball screw. The shaft is provided with a ball return arrangement 142, which will be described more closely below.

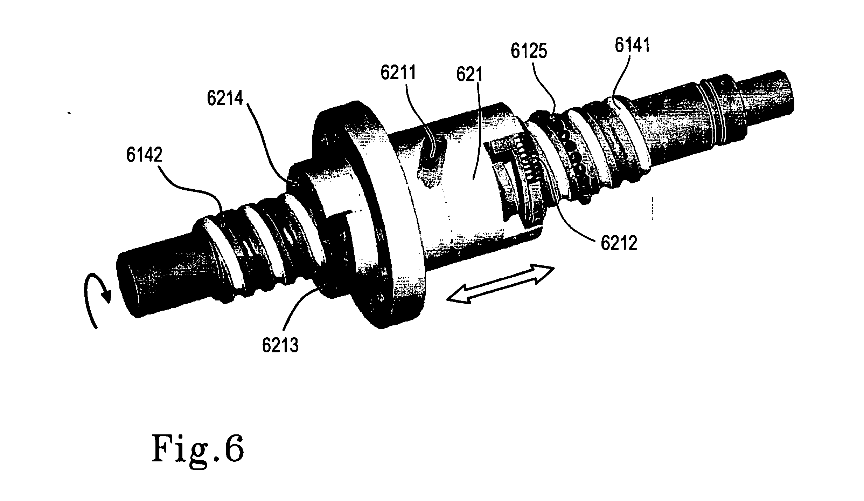

Figs. 6-9 illustrate different arrangement of the ball returns, which can be used in the actuator of the present invention.

A first preferred embodiment of a ball return system employed in the invention is illustrated in Fig. 6. The system comprises notch 6211 arranged diagonally on the ball nut 621, a preload system 6212, a return cap 6213 and a wiper 6214 arranged between the return cap and the shaft 6142. The shaft further comprises grooves or ball tracks 6141 in which the balls 6125 run.

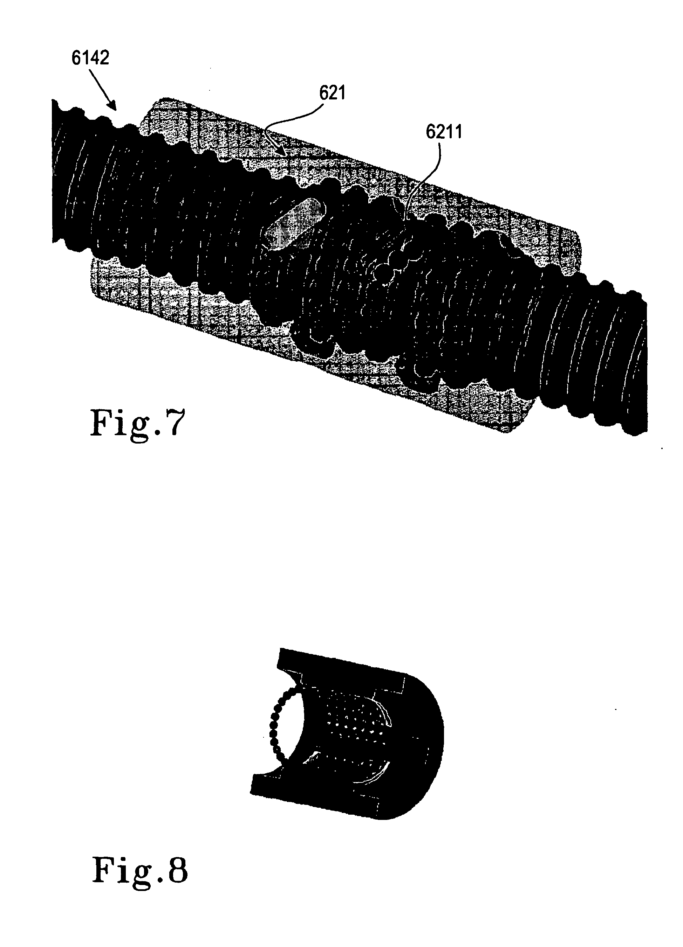

Fig. 7 illustrates the ball return with single liner screw according to Fig. 6, in which the notch 6211 forces balls 6125 passing through the notch to change track to the adjacent track.

Fig. 8 is a cut through a ball nut having multi liner ball return.

In the single- and multi liner system the balls are lead back after each circle around the shaft. The liner picks the balls out of the ball track and guides them with its path over the portion between the ball tracks of the shaft.

Fig. 9 is yet another example of the ball return, in which the shaft 9141 is provided with a return cap 9147 having a return channel 9148. The return cap systems picks the balls up at one end of the nut and lead them back, through a hole in the nut, to the other side.

Fig. 10 is the most preferred ball return system according to the invention. The ball return is very similar to the usual multi liner. The drawing shows only one return path.

The difference is that the liner return 10142 is placed in the shaft 10141 and the balls 10125 are lead through its path over the portion between the ball tracks 10122 of the nut. Thus, in this case seven circles of balls are provided. After each circle around the shaft, the balls will be carried back about the value of the ball track lead 10148.

The actuator operates in following way: A magnetic field is generated when electric current flows through the conductors of the stator and produces a magnetic field that has both a north and a south pole. The electric motor is essentially a spinning electromagnet. This electromagnet interacts with the permanent magnetic field of a set of opposing field magnets (magnetic elements). The interaction of the north and south pole of the electromagnet and the north and south poles of the field magnets produces a torque, which tends to spin the sleeve and the ball nut. As the ball nut spins, the magnetic poles of the magnetic elements are alternately reversed north to south and back again. As the nut rotates, electrical energy is transformed into mechanical energy and the balls force the shaft to rotate. If the shaft is prevented to rotate, it is displaced linearly. In this case sidewise, i.e. with respect to the plane of the drawing.

Obviously, the shaft does not have to extend from both sides of the housing and only one side is also possible.

Additionally, the housing may partly be filled with a lubrication agent 160, such as an oil, e.g. through a valve 117. Using oil allows overcoming the problems with temperature range of, for example grease, and also allowing better filling possibilities.

The motor further comprises means for detecting the end positions and/or the centre position, e.g. a magnetic element 146 arranged on the shaft and a Hall element 143on one end.

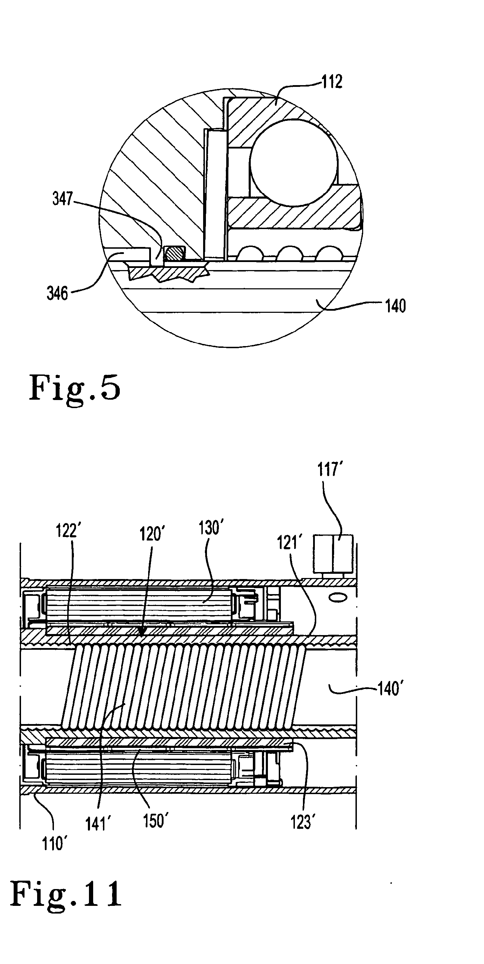

The ends of the shaft are provided with receiving arrangement for receiving and fixing other axis for example connected to steering wheels of a vehicle. As the shaft is fixed and cannot rotate, the rotation of the ball nut is transformed to an axial movement. It is also possible to achieve the same result by arranging an axial groove 346, as illustrated in Fig. 5, in the longitudinal direction of the shaft and a projection 347 in the ends, which stops the rotation of the shaft.

The ends of the shaft may also be provided with dampers to absorb forces due to undesired collisions.

Cleary, the invention is not limited to the ball nut/screw based embodiment as described and illustrated earlier. The embodiment 100' of Fig. 11 illustrates an example in which an ordinary (acme) screw/nut solution is used. Consequently, the shaft 140' and the nut 121' of the rotating element 120' are arranged with threads 141' and 122', respectively. In same way as the previous example, the nut 121' is provided with the sleeve 123' for receiving magnetic elements 150'. Likewise, in this case the stators actuator operates according to the previous example.

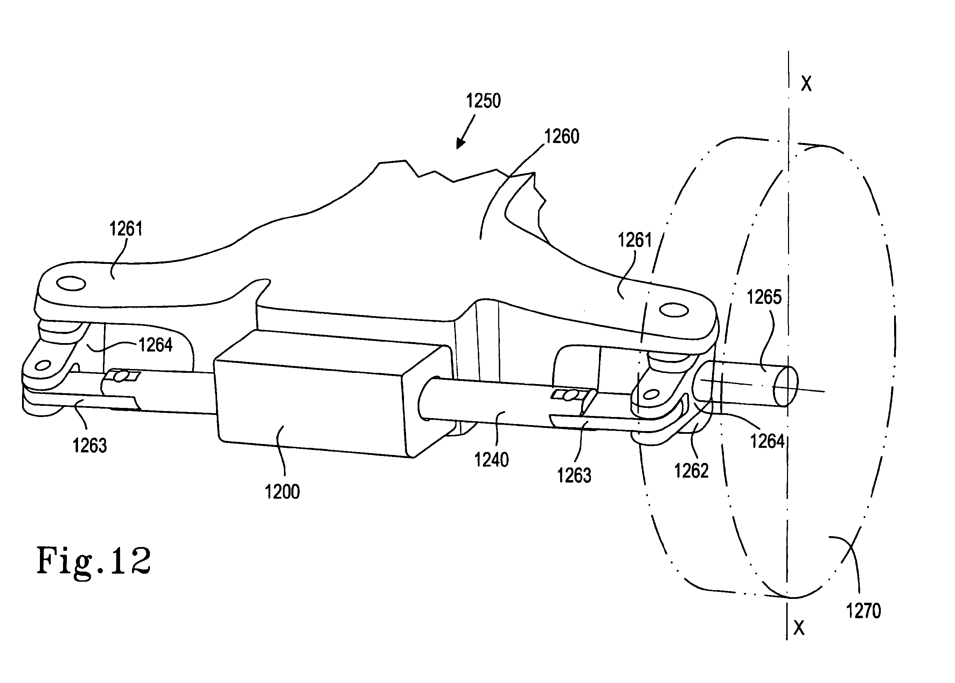

Fig. 12 illustrates a wheel suspension system 1250 employing a power steering motor 1200 according to a preferred embodiment of the invention. The system comprises a frame 1260, having upper and lower link arms 1261 and 1262, respectively. The motor 1200 is arranged in the mid section of the frame. The ends of the shaft 1240 are connected through links 1263 to joints 1264, which through taps 1265 are connected to the wheels 1270 (only one illustrated). Consequently, when the shaft 1240 is axially displaced, the joints 1264 will follow the movement of the shaft resulting in displacement and turn of the wheels around X axis. The steering may be applied on front or rear wheels of a vehicle.

The invention is not limited to the shown embodiments but can be varied in a number of ways within the scope of the appended claims and the arrangement and the method can be implemented in various ways depending on application, functional units, needs and requirements etc.

## Claims

1. A device functioning as an electric motor or an actuator (100, 100') comprising:
- a housing (110) encapsulating a rotating member (120, 120'),
- one or several arrangements (130, 130') for generating a magnetic field due to electrical current,
- a displaceable shaft (140, 140') at least partly having exterior grooves (141, 141'),
- said rotating member having at least a portion (121, 121') with inner grooves (122, 122') substantially corresponding to grooves on said shaft (140, 140'),
- a carrying sleeve (123) being arranged to be provided on an outer surface of said rotating member (120, 120') substantially perpendicular to extension direction of said grooves (122, 122') for interaction with said arrangement (130, 130') and rotating said rotating member
**characterised in**
**that** said sleeve has an interior shape corresponding to an outer surface of the rotating member and an outer surface comprising portions (1231) for receiving a number of magnetic elements (150, 150'), said portions being arranged as flat portion and/or grooves for receiving said magnetic elements.

2. The device of claim 1, wherein said rotating element is a ball nut.

3. The device of claim 2, wherein said shaft is arranged as ball screw.

4. The device of claim 1, wherein said rotating element is a nut.

5. The device of claim 4, wherein said shaft is at least partly threaded.

6. The device of claim 1, comprising an air gap between said magnetic element and said steeve

7. The device according to any of preceding claims, wherein said shaft is made in sections of different parts.

8. The device of claim 7, wherein said parts are made of different material.

9. The arrangement of claim 1, wherein said sleeve is made of a laminated material.

10. The arrangement of claim 3, wherein said shaft comprises ball return.

11. The arrangement of claim 10, wherein said ball return comprises a notch (6211) arranged diagonally on the ball nut (621), a preload system (6212), a return cap (6213) and a wiper (6214) arranged between the return cap and the shaft (6142), grooves or ball tracks (6141) in which the balls (6125) run.

12. The arrangement of claim 11, wherein said ball return comprises a single liner screw in which a notch (6211) forces balls (6125) passing through the notch to change track to the adjacent track.

13. The arrangement of claim 11, wherein said ball return comprises a ball nut having multi linear ball return.

14. The arrangement of claim 11, wherein said ball return comprises a single- or multi liner system, in which the balls are lead back after each circulation around the shaft and the liner picks the balls out of a ball track and guides them with its path over the portion between the ball tracks of the shaft.

15. The arrangement of claim 3, wherein the shaft (9141) is provided with a return cap (9147) having a return channel (9148), wherein return cap system picks the balls up at one end of the nut and lead them back, through a hole in the nut, to the other side.

16. The arrangement of claim 11, wherein said ball return comprises a liner return (10142) placed in the shaft (10141) and the balls (10125) are lead through its path over a portion between the ball tracks (10122) of the nut

17. The arrangement of claim 3, wherein said shaft comprises means for transforming rotation of the nut to an axial movement.

18. The arrangement of claim 1, wherein said housing is at least partly filled with a lubrication agent.

19. A vehicle having steering wheels and including a device according to any of claims 1-18.

20. A method of actuating a device functioning as an electric motor or actuator (100), comprising:
- a housing (110) encapsulating a rotating member (120),
- one or several arrangements (130) for generating a magnetic field due to electrical current,
- a displaceable shaft (140) at least partly being arranged as a ball screw,
- said rotating member having a portion (121) being provided as a ball nut,
- a carrying sleeve (123) being arranged to be provided on an outer surface of said rotating member (120),
the method comprising the steps of:
arranging magnetic elements (150, 150') on an outer surface of said carrying sleeve (123) substantially parallel with extension of said shaft for interaction with said arrangement (130) and rotating said ball nut, and energizing said stators to rotate said rotating member and transforming station of said rotating member to a linear movement.

21. A carrying sleeve for use in a device according to any of claims 1-18.

## Patentansprüche

1. Vorrichtung, die als ein Elektromotor oder als ein Aktuator (100, 100') arbeitet und umfasst:
- ein Gehäuse (110), das ein rotierendes Element (120, 120') umgibt,
- eine oder mehrere Anordnungen (130, 130'), um aufgrund eines elektrischen Stroms ein Magnetfeld zu erzeugen,
- eine verlagerbare Welle (140, 140'), die wenigstens teilweise äußere Rillen (141, 141') besitzt,
- wobei das rotierende Element wenigstens einen Abschnitt (121, 121') mit inneren Rillen (122, 122') besitzt, die im Wesentlichen den Rillen an der Welle (140, 140') entsprechen,
- eine Unterstützungshülse (123), die so angeordnet ist, dass sie an einer äußeren Oberfläche des rotierenden Elements (120, 120') im Wesentlichen senkrecht zu der Erstreckungsrichtung der Rillen (122, 122') vorgesehen ist, um mit der Anordnung (130, 130') in Wechselwirkung zu treten und um das rotierende Element zu drehen,
**dadurch gekennzeichnet,**
**dass** die Hülse eine innere Form besitzt, die einer äußeren Oberfläche des rotierenden Elements entspricht, und eine äußere Oberfläche besitzt, die Abschnitte (1231) aufweist, um eine Anzahl magnetischer Elemente (150, 150') aufzunehmen, wobei die Abschnitte als flacher Abschnitt und/oder als Rillen für die Aufnahme der magnetischen Elemente ausgebildet sind.

2. Vorrichtung nach Anspruch 1, wobei das rotierende Element eine Kugelmutter ist.

3. Vorrichtung nach Anspruch 2, wobei die Welle als Kugelumlaufspindel ausgelegt ist.

4. Vorrichtung nach Anspruch 1, wobei das rotierende Element eine Mutter ist.

5. Vorrichtung nach Anspruch 4, wobei die Welle wenigstens teilweise mit einem Gewinde versehen ist.

6. Vorrichtung nach Anspruch 1, die zwischen dem magnetischen Element und der Hülse einen Luftspalt aufweist.

7. Vorrichtung nach einem der vorhergehenden Ansprüche, wobei die Welle in Abschnitte aus unterschiedlichen Teilen ausgebildet ist.

8. Vorrichtung nach Anspruch 7, wobei die Teile aus unterschiedlichem Material hergestellt sind.

9. Anordnung nach Anspruch 1, wobei die Hülse aus einem laminierten Material hergestellt ist.

10. Anordnung nach Anspruch 3, wobei die Welle eine Kugelrückführung aufweist.

11. Anordnung nach Anspruch 10, wobei die Kugelrückführung eine Kerbe (6211), die diagonal auf der Kugelmutter (621) angeordnet ist, ein Vorbelastungssystem (6212), eine Rückführungskappe (6213) und eine Wischeinrichtung (6214), die zwischen der Rückführungskappe und der Welle (6142) angeordnet ist, umfasst, wobei in Rillen oder Kugelführungen (6141) die Kugeln (6125) laufen.

12. Anordnung nach Anspruch 11, wobei die Kugelrückführung eine einzige Laufbüchsenschraube aufweist, in der eine Kerbe (6211) Kugeln (6125) dazu zwingt, sich durch die Kerbe zu bewegen, um die Spur zu der benachbarten Spur zu wechseln.

13. Anordnung nach Anspruch 11, wobei die Kugelrückführung eine Kugelmutter mit einer geradlinigen Mehrfachkugelrückführung aufweist.

14. Anordnung nach Anspruch 11, wobei die Kugelrückführung ein einfaches oder ein mehrfaches Laufbüchsensystem aufweist, in dem die Kugeln zurückgeführt werden, nachdem sie um die Welle umgelaufen sind, und wobei die Laufbüchse die Kugeln aus einer Kugelführung aufnimmt und sie auf ihrem Weg über den Abschnitt zwischen den Kugelbahnen der Welle führt.

15. Anordnung nach Anspruch 3, wobei die Welle (9141) mit einer Rückführungskappe (9147) versehen ist, die einen Rückführungskanal (9148) besitzt, wobei ein Rückführungskappensystem die Kugeln an einem Ende der Mutter aufnimmt und sie durch ein Loch in der Mutter zur anderen Seite zurückführt.

16. Anordnung nach Anspruch 11, wobei die Kugelrückführung eine Laufbüchsenrückführung (10142) aufweist, die in der Welle (10141) angeordnet ist, und die Kugeln (10125) durch ihren Weg über einen Abschnitt zwischen den Kugelbahnen (10122) der Mutter geführt werden.

17. Anordnung nach Anspruch 3, wobei die Welle Mittel aufweist, um die Drehung der Mutter in eine axiale Bewegung zu überführen.

18. Anordnung nach Anspruch 1, wobei das Gehäuse wenigstens teilweise mit einem Schmiermittel gefüllt ist.

19. Fahrzeug, das einschlagbare Räder besitzt und eine Vorrichtung nach einem der Ansprüche 1-18 aufweist.

20. Verfahren zum Betätigen einer Vorrichtung, die als ein Elektromotor oder als ein Aktuator (100) arbeitet, die umfasst:
- ein Gehäuse (110), das ein rotierendes Element (120) umgibt,
- eine oder mehrere Anordnungen (130), um aufgrund eines elektrischen Stroms ein Magnetfeld zu erzeugen,
- eine verlagerbare Welle (140), die wenigstens teilweise als eine Kugelumlaufspindel ausgebildet ist,
- wobei das rotierende Element einen Abschnitt (121) besitzt, der als eine Kugelmutter vorgesehen ist,
- eine Unterstützungshülse (123), die so ausgebildet ist, dass sie an einer äußeren Oberfläche des rotierenden Elements (120) vorgesehen ist,
wobei das Verfahren die folgenden Schritte umfasst:
Anordnen magnetischer Elemente (150, 150') auf einer äußeren Oberfläche der Unterstützungshülse (123) im Wesentlichen parallel zu der Erstreckung der Welle, um mit der Anordnung (130) in Wechselwirkung zu treten und um die Kugelmutter zu drehen, und Erregen des Stators, um das rotierende Element zu drehen und um die Drehung des rotierenden Elements in eine geradlinige Bewegung zu überführen.

21. Unterstützungshülse für die Verwendung in einer Vorrichtung nach einem der Ansprüche 1-18.

## Revendications

1. Dispositif fonctionnant comme un moteur électrique ou un vérin (100, 100') comprenant :
- un carter (110) entourant un élément rotatif (120, 120'),
- un ou plusieurs agencements (130, 130') destinés à générer un champ magnétique dû à un courant électrique,
- un arbre pouvant être déplacé (140, 140') comportant au moins en partie des rainures extérieures (141, 141'),
- ledit élément rotatif comportant au moins une partie (121, 121') comportant des rainures intérieures (122, 122') correspondant globalement aux rainures sur ledit arbre (140, 140'),
- un manchon de support (123) étant agencé pour être prévu sur une surface extérieure dudit élément rotatif (120, 120') sensiblement perpendiculaire à la direction d'extension desdites rainures (122, 122') pour une interaction avec ledit agencement (130, 130') et faisant tourner ledit élément rotatif,
**caractérisé en ce que**
ledit manchon présente une forme intérieure correspondant à une surface extérieure de l'élément rotatif et une surface extérieure comprenant des parties (1231) destinées à recevoir un nombre d'éléments magnétiques (152, 152'), lesdites parties étant disposées comme une partie plate et/ou des rainures pour recevoir lesdits éléments magnétiques.

2. Dispositif selon la revendication 1, dans lequel ledit élément rotatif est un écrou à billes.

3. Dispositif selon la revendication 2, dans lequel ledit arbre est agencé comme une vis sphérique.

4. Dispositif selon la revendication 1, dans lequel ledit élément rotatif est un écrou.

5. Dispositif selon la revendication 4, dans lequel ledit arbre est au moins en partie taraudé.

6. Dispositif selon la revendication 1, comprenant un espace d'air entre ledit élément magnétique et ledit manchon.

7. Dispositif selon l'une quelconque des revendications précédentes, dans lequel ledit arbre est réalisé dans des sections de différentes parties.

8. Dispositif selon la revendication 7, dans lequel lesdites parties sont constituées d'un matériau différent.

9. Agencement selon la revendication 1, dans lequel ledit manchon est constitué d'un matériau stratifié.

10. Agencement selon la revendication 3, dans lequel ledit arbre comprend un élément de renvoi de billes.

11. Agencement selon la revendication 10, dans lequel ledit élément de renvoi de billes comprend une encoche (6211) disposée en diagonale sur l'écrou à billes (621), un système de précharge (6212), une garniture de renvoi (6213) et une came (6214) agencée entre la garniture de renvoi et l'arbre (6142), des gorges ou des voies de roulement à billes (6141) dans lesquelles les billes (6125) circulent.

12. Agencement selon la revendication 11, dans lequel ledit élément de renvoi de billes comprend une vis à une seule chemise dans laquelle une encoche (6211) force les billes (6125) à traverser l'encoche pour passer d'une voie de roulement à une voie de roulement adjacente.

13. Agencement selon la revendication 1, dans lequel ledit élément de renvoi de billes comprend un écrou à billes comportant de multiples éléments de renvoi de billes linéaires.

14. Agencement selon la revendication 11, dans lequel ledit élément de renvoi de billes comprend un système à une seule chemise ou à plusieurs chemises, dans lequel les billes sont renvoyées après chaque circulation autour de l'arbre et la chemise extrait les billes d'une voie de roulement à billes et les guide, son chemin étant sur la partie entre les voies de roulement à billes de l'arbre.

15. Agencement selon la revendication 3, dans lequel l'arbre (9141) est doté d'une garniture de renvoi (9147) comportant un canal de renvoi (9148), dans lequel le système de garniture de renvoi prélève les billes à une première extrémité de l'écrou et les renvoie, à travers un trou dans l'écrou, vers l'autre côté.

16. Agencement selon la revendication 11, dans lequel ledit élément de renvoi de billes comprend un élément de renvoi de chemise (10142) placé dans l'arbre (10141) et les billes (10125) sont conduites à travers son chemin sur une partie entre les voies de roulement à billes (10122) de l'écrou.

17. Agencement selon la revendication 3, dans lequel ledit arbre comprend un moyen destiné à transformer la rotation de l'écrou en un mouvement axial.

18. Agencement selon la revendication 1, dans lequel ledit carter est au moins partiellement rempli d'un agent lubrifiant.

19. Véhicule comportant des roues directrices et comprenant un dispositif selon l'une quelconque des revendications 1 à 18.

20. Procédé d'actionnement d'un dispositif fonctionnant comme un moteur électrique ou un vérin (100), comprenant :
- un carter (110) entourant un élément rotatif (120),
- un ou plusieurs agencements (130) destinés à générer un champ magnétique dû à un courant électrique,
- un arbre pouvant être déplacé (140) étant agencé au moins en partie comme une vis sphérique,
- ledit élément rotatif comportant une partie (121) étant prévue comme un écrou à billes,
- un manchon de support (123) étant agencé pour être prévu sur une surface extérieure dudit élément rotatif (120),
le procédé comprenant les étapes consistant à :
agencer des éléments magnétiques (150, 150') sur une surface extérieure dudit manchon de support (123) sensiblement parallèle à l'extension dudit arbre pour une interaction avec ledit agencement (130) et une rotation dudit écrou à billes, et exciter lesdits stators pour faire tourner ledit élément rotatif et transformer la station dudit élément rotatif en un mouvement linéaire.

21. Manchon de support destiné à être utilisé dans un dispositif selon l'une quelconque des revendications 1 à 18.
